# EUROPÄISCHE PATENTSCHRIFT

(11) **EP 0 732 141 B1**
(45) Veröffentlichungstag und Bekanntmachung des Hinweises auf die Patenterteilung: **22.03.2000**
(21) Anmeldenummer: 95118680.8
(22) Anmeldetag: 28.11.1995
(51) Int. Cl.: B01D 63/02, A61M 1/16

(54) **Hohlfadenbündel sowie Stoff- und/oder Wärmetauscher**
Hollow filament bundle and mass and/or heat exchanger
Faisceaux de filaments creux ainsi que échangeur de masse et/ou de chaleur

(30) Priorität: 11.03.1995 DE 19508895; 20.10.1995 DE 19539192
(43) Veröffentlichungstag der Anmeldung: 18.09.1996
(73) Patentinhaber: Akzo Nobel N.V., 6824 BM Arnhem (NL)
(72) Erfinder: Pasquali, Renato, D-42389 Wuppertal (DE); Stein, Uwe, D-52525 Heinsberg-Schafhausen (DE)
(74) Vertreter: Fett, Günter

(56) Entgegenhaltungen:
- EP-A- 0 464 737
- WO-A-93/19839
- FR-A- 2 287 934
- US-A- 4 293 418
- US-A- 4 428 403

## Beschreibung

Gegenstand der vorliegenden Erfindung sind Hohlfadenbündel sowie Stoff- und/oder Wärmetauscher, welche derartige Hohlfadenbündel enthalten.

Derartige Hohlfadenbündel sind vielfach bekannt. Sie werden zur Herstellung von Wärme- und oder Stoffaustauschern eingesetzt, wobei das Bündel an einem oder an beiden Enden in einen Rohrboden eingebettet wird (im Falle von einem Rohrboden sind in der Regel die freien Enden der Hohlfäden verschlossen). Hierdurch kann der Innenhohlraum der Hohlfäden vom Raum um die Hohlfäden herum abgetrennt und somit mit verschiedenen Fluiden, die zum Wärmeaustausch unterschiedliche Temperaturen bzw. zum Stoffaustausch unterschiedliche Konsistenz aufweisen, beschickt werden. Wesentlich für die gute Wirksamkeit derartiger Hohlfadenbündel ist zum einen die fluiddichte Einbettung im Rohrboden und zum anderen eine gute und gleichmäßige Umströmbarkeit der Hohlfäden. Hierzu ist es erforderlich, daß die Hohlfäden untereinander beabstandet sind, um eine möglichst große wirksame Oberfläche aufzuweisen. Dies wird beispielsweise gemäß US-A-4,293,418 dadurch erreicht, daß jeweils ein oder zwei Hohlfäden mit mindestens einem Wickelfaden spiralförmig umwickelt werden. Die Wickelfäden wirken als Abstandhalter zwischen benachbarten Hohlfäden, wobei die Dicke der Wickelfäden den zwischen benachbarten Hohlfäden Strömungsquerschnitt bestimmt. Werden zwei Hohlfäden gleichzeitig umwickelt, berühren sich diese beiden Hohlfäden linienförmig, so daß zwischen diesen beiden Hohlfäden kein Fluid durchströmen kann. Außerdem ist einleuchtend, daß diese Art der Herstellung von Kernbündeln sehr aufwendig ist und insbesondere bei empfindlichen Hohlfäden die Gefahr der Beschädigung einzelner Hohlfäden in sich birgt. Auch gemäß JP-A-2060658 (Abstract) wird vorgeschlagen, jeden einzelnen Hohlfaden mit Abstandshaltern zu umwickeln.

In EP-A-0464737 wird empfohlen, Holfäden und Filamente derart zu vermischen, daß jeweils Hohlfäden und Filamente überwiegend in Längsrichtung angeordnet sind und die Filamente als Abstandshalter für die Hohlfäden fungieren.

Aufgabe der vorliegenden Erfindung ist es, ein weiteres Hohlfadenbündel zur Verfügung zu stellen, welches die oben aufgeführten Nachteile nicht aufweist. Insbesondere soll die Herstellung der erfindungsgemäßen Hohlfadenbündel kostengünstig sein. Es ist auch Aufgabe der vorliegenden Erfindung, einen Wärme- und/oder Stoffaustauscher zur Verfügung zu stellen, der kostengünstig herstellbar ist und eine gute Wirksamkeit aufweist.

Diese Aufgabe wird durch ein Hohlfadenbündel gelöst, welches mindestens ein Kernbündel enthält, welches Kernbündel mindestens drei Hohlfäden enthält, die um einen Stützfaden herum angeordnet und mit mindestens einem Wickelfaden umwickelt sind, wobei der Stützfaden über die Länge des Kernbündels unterschiedliche Querschnittsformen aufweist.

Durch den Stützfaden werden die Hohlfäden auf Abstand auch voneinander gehalten, so daß im Zusammenspiel der über die Länge des Kernbündels unterschiedlichen Querschnittsform des Stützfadens zwischen den Hohlfäden einerseits und zwischen den Hohlfäden und dem Stützfaden andererseits ein Fluid fließen kann. In einfacher Weise kann der Stützfaden ein Voll- oder Hohlfaden mit über seiner Länge variierendem Durchmesser sein. Der Stützfaden kann aber auch derart offenporig ausgebildet sein, daß durch dessen Poren das Fluid strömen kann.

In einer besonderen Ausgestaltung enthält das erfindungsgemäße Hohlfadenbündel mindestens ein Teilbündel, bei dem um das Kernbündel herum mindestens eine weitere Lage von Hohlfäden angeordnet ist, wobei jede weitere Lage mit mindestens einem Wickelfaden umwickelt ist.

Besonders günstig ist es, wenn der Stützfaden und/oder der Wickelfaden ein Multifilamentfaden ist. Da bei einem Multifilamentfaden über seine Länge die Filamente ihre Plätze wechseln, hat auch ein Multifilamentgarn über seine Länge unterschiedliche Querschnittsformen. In der Regel handelt es sich bei Multifilamentfäden um solche, bei denen die Filamente Vollfäden, also keine Hohlfäden sind. In besonderen Fällen können jedoch die Filamente auch als Hohlfäden und/oder porös ausgebildet sein. Wird der Stützfaden von einem Multifilamentfaden gebildet, ergibt sich eine gute Durchströmbarkeit aufgrund der sehr flexiblen Einzelfilamente des Multifilamentfadens, während die Ausbildung des Wickelfadens als Multifilamentfaden insbesondere bei empfindlichen Hohlfäden eine schonende Herstellung der Wicklung sicherstellt.

Besonders vorteilhaft ist es, wenn der Stützfaden und/oder der Wickelfaden ein texturierter Multifilamentfaden ist. Ein texturierter Multifilamentfaden, der über alle bekannten Texturierverfahren wie beispielsweise über Stauchkräuseln oder ein Falschdrall-Texturierverfahren, hergestellt sein kann, zeichnet sich insbesondere durch seine Voluminosität aus, die dieser entfalten will. Wird bei der Herstellung des Kernbündels zwischen die Hohlfäden ein solcher texturierter Multifilamentfaden einlaufen gelassen und das so entstandene Bündel mit einem oder mehreren Wickelfäden umwickelt, so versuchen anschließend die Filamente sich bestmöglich zwischen den Hohlfäden auszubreiten, wobei auch einzelne Filamente sich zumindest abschnittsweise zwischen benachbarte Hohlfäden zu legen, so daß hierdurch ein gewisser Mindestabstand auch zwischen benachbarten Hohlfäden gewährleistet ist.

Durch die über seine Länge sich verschieden ausbreitenden Filamente weist ein texturierter Multifilamentfaden über seine Länge deutlich unterschiedliche Querschnittsformen auf.

Bei der Herstellung der Kernbündel ist besonders günstig, daß die Kernbündel direkt nach der Herstellung der Hohlfäden ohne Zwischenaufwicklung hergestellt werden können. Die Stützfäden werden in der Regel von einer oder mehreren Spule(n) abgezogen und den von der Hohlfadenherstellmaschine oder von Spulen abgezogenen Hohlfäden derart zugeführt, daß die Stützfäden in der Mitte des Hohlfadenbündels angeordnet werden. Danach wird das entstandene Kernbündel mit einem oder mehreren Wickelfäden umwickelt. Dies kann beispielsweise dadurch geschehen, daß Spulen, auf welche die Wickelfäden aufgewickelt sind, auf einer drehbaren, mittig offenen Scheibe angeordnet sind. Durch das Zentrum dieser Scheibe wird das aus Stützfaden und Hohlfäden bestehende Kernbündel geführt, und der Wickelfaden durch Drehen der Scheibe auf diesem Kernbündel wendelförmig abgelegt. Es versteht sich von selbst, daß die Anzahl der Hohlfäden und die Dicke des Stützfadens vorteilhafter Weise derart aufeinander abgestimmt sind, daß die Hohlfäden den größten Teil des Umfanges des Stützfadens abdecken, jedoch noch zumindest geringe Abstände zwischen benachbarten Hohlfäden verbleiben. Beispielsweise hat sich bei einem Stützfaden aus Polyester, der aus einem texturierten Multifilamentfaden mit einem Gesamttiter von 167 dtex und einer Filamentanzahl von 30 besteht, bestens bewährt, um einen solchen Stützfaden bis zu 10 Hohlfäden mit einem Außendurchmesser von je 240 mm anzuordnen. Als Wickelfaden eignet sich für ein solches Kernbündel ein oder mehrere texturierte Multifilamentfäden, die beispielsweise 14 Einzelfilamente und einen Gesamttiter von 33 dtex oder auch wie der Stützfaden einen Gesamttiter von 167 dtex und einer Filamentanzahl von 30 aufweisen. Die Anzahl der Wicklungen um das Kernbündel pro Längeneinheit läßt sich bei dem geschilderten Herstellverfahren auf einfache Weise über die Geschwindigkeit der Kernbündel und die Drehzahl der bewegten Scheibe einstellen. Ist die Geschwindigkeit der Hohlfäden im Verhältnis der möglichen Drehzahl der Scheibe groß, kann dies durch Wickeln von mehreren Wickelfäden ausgeglichen werden. In der Regel werden in einer Hohlfadenherstellmaschine gleichzeitig mehr als zehn Hohlfäden gleichzeitig hergestellt. In diesem Falle werden entsprechend der Anzahl der aus der Hohlfadenherstellmaschine herauslaufenden Hohlfäden eine entsprechende Anzahl von mit Wickelfadenspulen bestückten drehbar angetriebene Scheiben angeordnet.

Bei der Herstellung der Teilbündel werden mehrere Hohlfäden oder Hohlfadengruppen um das Kernbündel herum angeordnet, wonach wiederum über auf einer drehbaren Scheibe angeordnete Wickelfadenspulen, das Kernbündel mit den darum angeordneten Hohlfäden, welche durch die Scheibe hindurchgeführt werden, mit einem oder mehreren Wickelfaden umwickelt. Danach können weitere Hohlfäden um das nunmehr entstandene Bündel in einer zweiten Lage herumgelegt werden, wonach auch dieses Bündel wieder mit einem oder mehreren Wickelfaden umwickelt werden. Dieser Vorgang kann mehrfach wiederholt werden. Günstig ist es hierbei, wenn in jeder Lage so viele Hohlfäden vorgesehen werden, daß am Umfang des bisher entstandenen Bündels die Hohlfäden gleichmäßig verteilt angeordnet sind, wobei alle Hohlfäden nebeneinander liegen. Hierbei hat es sich als zweckmäßig erwiesen, wenn nur so viele Hohlfäden in einer Lage angeordnet werden, daß die Hohlfäden dieser Lage noch einen Abstand, beispielsweise einen Abstand der dem Durchmesser des Wickelfadens entspricht, zueinander aufweisen.

Die Herstellung des aus Kernbündeln und/oder aus Teilbündeln bestehenden Hohlfadenbündels erfolgt aus den Kernbündeln beziehungsweise aus den Teilbündeln auf bekannte Weise. Beispielsweise können die Kernbündel und/oder die Teilbündel nach dem Umwickeln direkt auf Länge geschnitten und aufeinander und nebeneinander gelegt werden. Günstiger ist es jedoch, wenn die Kernbündel und/oder Teilbündel auf eine Trommel gewickelt werden und nach Erreichen der gewünschten Hohlfadenzahl von der Trommel abgenommen und auf die gewünschte Länge geschnitten werden (Rhönradverfahren). Die Kernbündelstränge und/oder die Teilbündelstränge können aber auch auf eine stehende Ablage mit Hilfe von einem Fadenführergestänge um diese Ablage gewickelt werden (Flyerverfahren). Auch hier wird das entstandene, aus mehreren Kernbündeln und/oder Teilbündeln bestehende Hohlfadenbündel abgenommen und auf Länge geschnitten.

Bei dem erfindungsgemäßen Hohlfadenbündel hat es sich besonders bewährt, wenn der Titer des Stützfadens zwischen ein und drei mal so groß ist wie der Titer des Wickelfadens. Die Wirksamkeit des erfindungsgemäßen Hohlfadenbündels kann dadurch gesteigert werden, daß die Hohlfäden eine Ondulation aufweisen. Die hierbei erreichte höhere Voluminosität kann dadurch ausgeglichen verkleinert werden, daß die Wickelfäden jeweils im Tal der Ondulation der Hohlfäden angeordnet sind. Der Wikkelfaden kann hierbei beim entsprechenden Wickeln dazu dienen, bei der nachfolgenden Weiterverarbeitung des Kernbündels oder des Teilbündels und des daraus hergestellten Hohlfadenbündels bei Zugbeanspruchungen die Ondulation zu erhalten. Insofern kann der Wickelfaden auch dafür eingesetzt werden, daß durch Zugbeanspruchung der Kernbündel beziehungsweise der Teilbündel deren Ondulation nicht vermindert, zumindest jedoch nicht vollständig beseitigt wird.

Das erfindungsgemäße Hohlfadenbündel zeichnet sich insbesondere dadurch aus, daß die Hohlfäden des Kernbündels und/oder die Hohlfadenlagen des Teilbündels mit mindestens einem Wikkelfaden wendelförmig umwickelt sind. Im Falle von mehreren Wickelfäden kann es günstig sein, diese in gleicher Richtung anzuordnen. Zur besseren Fixierung der Hohlfäden im Kernbündel beziehungsweise im Teilbündel kann es aber auch von Vorteil sein, daß die Hohlfäden des Kernbündels beziehungsweise des Teilbündels mit mindestens zwei Wickelfäden wendelförmig umwickelt sind, wobei mindestens ein Wickelfaden eine zu den anderen Wickelfäden gegenläufige Wendel aufweist. Werden also mehrere Wickelfäden eingesetzt, so kann eine Sorte der Wikkelfäden gegenläufig zu einer zweiten Sorte der Wickelfäden angeordnet sein. Zur Herstellung gegenläufig gewickelter Kernbündel sind naturgemäß auch zwei, sich gegenläufig drehende Scheiben mit Wickelfadenspulen erforderlich.

Als besonders vorteilhaft hat es sich herausgestellt, wenn die Wendel des Wickelfadens über die Länge des Kernbündels eine unterschiedliche Steigung aufweist. Dies läßt sich bei dem oben beschriebenen Herstellverfahren in einfacher Weise dadurch erreichen, daß die die Wickelfadenspulen haltenden, sich drehenden Scheiben regelmäßig oder unregelmäßig ihre Drehzahl ändern, während die aus Stützfäden und Hohlfäden bestehenden Gebilde Teilbündel mit konstanter Geschwindigkeit durch die Scheiben geführt werden.

Das erfindungsgemäße Hohlfadenbündel weist dann einen besonders günstigen Füllgrad auf, wenn die Wickelfäden auf den Kernbündeln und/oder auf den Teilbündeln derart angeordnet sind, daß der Abstand benachbarter Kernbündel und/oder Teilbündel dem Durchmesser des Wickelfadens entspricht. Dies läßt sich bei dem oben beschriebenen Herstellverfahren dadurch erreichen, daß der Wickelfaden relativ locker auf dem Kernbündel oder Teilbündel ablegt wird, so daß beim Ablegen der Kernbündel beziehungsweise der Teilbündel bei der nachfolgenden Hohlfadenbündelherstellung die Wickelfäden noch in geringem Maße leicht verschiebbar sind, so daß beim Aufeinanderlegen zweier Kernbündel, zweier Teilbündel, eines Kernbündels auf ein Teilbündel oder eines Teilbündels auf ein Kernbündel die Wickelfäden sich gegenseitig derart verschieben, daß sie nebeneinander zu liegen kommen. In einem solchen Falle entspricht der Abstand zwischen benachbarten Kernbündeln und/oder Teilbündeln der Dicke des Wickelfadens.

Für spezielle Einsatzzwecke des erfindungsgemäßen Hohlfadenbündels ist es günstig, wenn die Kernbündel wellenförmig ausgebildet sind. Dies kann durch stärkeres Changieren beim Ablegen der Kernbündel oder vorab durch Ondulieren der Hohlfäden bewerkstelligt werden.

Ein Hohlfadenbündel, bei dem die Kernbündel und/oder die Teilbündel im Hohlfadenbündel in mehreren zur Erstreckungsrichtung der Hohlfäden parallelen Lagen angeordnet sind, wobei in Draufsicht auf die Lagen sich die Kernbündel und/oder die Teilbündel der einen Lage mit den Kernbündeln und/oder mit den Teilbündeln benachbarter Lagen kreuzen, hat sich für die meisten Einsatzzwecke bestens bewährt. Diese Anordnung kann auf besonders einfache Weise durch changierendes Ablegen der Kernbündel und/oder Teilbündel auf die oben erwähnte Trommel oder die oben erwähnte Ablage erreicht werden.

Bevorzugt werden Hohlfadenbündel, welche sich dadurch auszeichnen, daß beim Kernbündel der Stützfaden einen Gesamttiter von 100 bis 1000 dtex aufweist, um den 6 bis 40 Hohlfäden mit einem Außendurchmesser von 100 bis 600 mm angeordnet sind. Für den Wickelfaden hat sich ein Gesamttiter von 5 bis 350 dtex sowohl für dein Kernbündel als auch für ein Teilbündel bestens bewährt.

Wie bereits weiter oben ausgeführt, kann das Hohlfadenbündel nur aus Kernbündeln bestehen. Es kann aber zusätzlich auch noch mehrere einzelne Hohlfäden enthalten, wobei diese einzelnen Hohlfäden bevorzugt zwischen den Kernbündeln gleichmäßig verteilt angeordnet sein sollten. Das erfindungsgemäße Hohlfadenbündel kann aber auch Kernbündel und Teilbündel enthalten. Auch hier kann es in gewissen Fällen zweckmäßig sein, zwischen die Kernbündel und Teilbündel weiter einzelne Hohlfäden anzuordnen. In bestimmten Fällen kann es auch zweckmäßig sein, mehrere Kernbündel und/oder Teilbündel zusammen noch einmal zu umwickeln und mehrere derartig umwikkelte Gebilde zum Hohlfadenbündel zusammenzusetzen. Das erfindungsgemäße Hohlfadenbündel kann aber auch nur aus Teilbündeln bestehen beziehungsweise zwischen diesen Teilbündeln noch einzelne weitere Hohlfäden aufweisen, wobei auch hier wieder mehrere Teilbündel mit einem weiteren Wikkelfaden umwickelt sein können. Das erfindungsgemäße Hohlfadenbündel kann aber auch aus einem einzigen Teilbündel bestehen, wobei dann durch die Anzahl der Lagen, die jeweils durch einen oder mehrere, gleichsinnig oder gegensinnig gewickelte Wickelfäden getrennt sind, praktisch jede gewünschte Anzahl von Hohlfäden in dem Hohlfadenbündel vereinigt sein können.

Im Falle von Teilbündeln, insbesondere von Teilbündeln, die mehrere durch Wickelfäden getrennte Lage aufweisen, hat es sich gezeigt, daß auf den im Kernbündel günstiger Weise angeordneten Stützfaden verzichtet werden kann, ohne daß hierbei die Wirksamkeit des fertigen Hohlfadenbündels bei seinem bestimmungsgemäßen Einsatz beeinträchtigt wird.

Die erfindungsgemäß gestellte Aufgabe wir auch gelöst durch einen Stoff- und/oder Wärmetauscher, enthaltend mindestens ein erfindungsgemäßes Hohlfadenbündel, wobei mindestens ein Ende des Hohlfadenbündels derart in (jeweils) einen Rohrboden eingebettet ist, daß alle Hohlfadenenden des betreffenden Hohlfendenbündelendes flüssigkeitsdicht vom Rohrbodenmaterial umfaßt sind.

In dem Falle, bei dem nur ein Ende des Hohlfadenbündels in einem Rohrboden eingebettet ist, sind in der Regel die anderen, freien Enden der Hohlfäden flüssigkeitsdicht verschlossen (dead end). In der Regel sind jedoch beide Enden des Hohlfadenbündels in jeweils einen Rohrboden derart eingebettet, daß alle Hohlfadenenden des jeweiligen Endes des Hohlfadenbündels vom Rohrbodenmaterial des jeweiligen Rohrbodens flüssigkeits- und/oder gasdicht umfaßt sind. Hierbei sind die Innenhohlräume der Hohlfäden auf mindestens einer Außenseite des Rohrboden sichtbar, also nicht verschlossen. Derartige Stoff- und/oder Wärmetauscher zeichnen sich durch besonders hohe Effektivität aus.

Die erfindungsgemäßen Stoffaustauscher können je nach verwendeten Hohlfäden zur Dialyse, Hämodialyse, Hämofiltration, Hämodiafiltration, Oxygenation von Blut, Gasseparation, Mikrofiltration, Nano- und/oder Ultrafiltration eingesetzt werden. Auch in Affinitätsmodulen können die erfindungsgemäßen Hohlfadenbündel eingesetzt werden. Hierzu wird in den Poren der Hohlfäden ein Ligand eingelagert.

Die Hohlfäden, die für die erfindungsgemäßen Hohlfadenbündel geeignet sind, können alle denkbaren geometrischen Formen aufweisen. In der Regel wird bei diesen Hohlfäden sowohl der Innenquerschnitt als auch der Außenquerschnitt eine kreisrunde oder kreisähnliche Form aufweisen. Innen- und/oder Außenquerschnitt können aber auch andere geometrische Formen, wie beispielsweise elliptische, dreieckige, quadratische, rechteckige oder polygone Formen aufweisen. Auch das Material der Hohlfäden kann in weiter Weise variieren. Diese Materialien sind hinreichend bekannt, so daß hier nicht weiter darauf eingegangen wird. Genauso wie bei dem Material, aus dem die Stütz- und/oder Wickelfäden bestehen, kommt es nicht auf die Auswahl des Materials an. Wesentlich ist, daß für Hohlfäden, Stützfäden und Wickelfäden Materialien aus gesucht werden, die bei dem jeweiligen Einsatzzweck geeignet sind. In vielen Fällen müssen diese Materialien toxisch unbedenklich sein. Cellulosische Hohlfäden sowie Hohlfäden aus Polyäthersulfonen, Polypropylenen, Polyäthylenen, Polyamiden, Polyacrylnitrilen, Polyacrylaten, Polyimiden, Polyamidimiden, Polycarbonaten, Polyätherestern, sowie Copolymeren und/oder Mischungen dieser Polymeren haben sich bestens bewährt. Für die Stütz- und/oder Wickelfäden haben sich als Materialien Polyester, Polypropylene, Polyacrylate, Polyacrylnitrile, Polyamide und Cellulosen bestens bewährt.

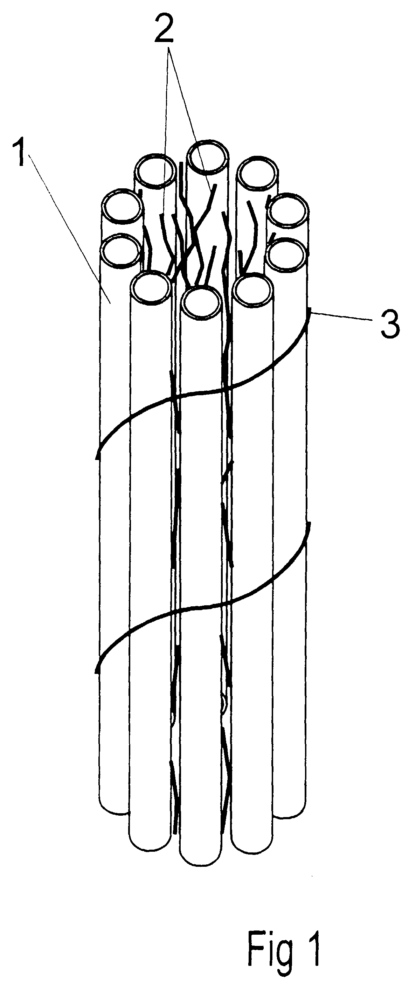

Figur 1 zeigt schematisch ein Kernbündel aus dem das erfindungsgemäße Hohlfadenbündel zusammengesetzt ist. Die Hohlfäden 1 sind um ein texturiertes Multifilamentgarn, bestehend aus einzelnen Filamenten 2 herum angeordnet. Um diese Hohlfäden ist ein Wickelfaden 3 wendelförmig gewickelt. Das erfindungsgemäße Hohlfadenbündel ist in der Regel nur aus Kernbündeln aufgebaut, kann aber außer den Kernbündeln auch zusätzlich noch einzelne Hohlfäden enthalten, die in dem zwischen benachbarten Kernbündeln gebildeten Hohlraum angeordnet sind.

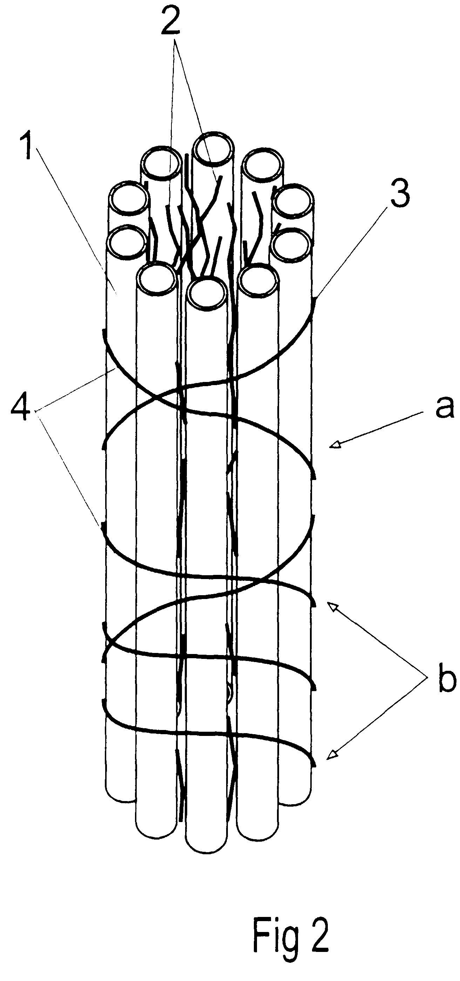

Figur 2 zeigt wiederum schematisch ein Kernbündel, bei dem zusätzlich zu dem in Figur 1 dargestellten Kernbündel ein weiterer Wickelfaden 4 dargestellt ist, dessen Wendel gegenläufig zur Wendel des Wickelfadens 3 angeordnet ist. Gleichzeitig weist der Wickelfaden 4 eine über die Länge des Kernbündels unterschiedliche Steigung, in der Figur mit a und b bezeichnet, auf. Wie oben ausgeführt, können die unterschiedliche Steigung aufweisenden Wickelfäden einzeln oder zu mehreren oder, wie hier gezeigt, auch in Verbindung mit gegenläufig angeordneten Wickelfäden auf dem Kernbündel angeordnet sein. Es können auch gegenläufig angeordnete Wickelfäden mit konstanter Wendel oder Schraube vorgesehen sein.

## Patentansprüche

1. Hohlfadenbündel, enthaltend mindestens ein Kernbündel, welches Kernbündel mindestens drei Hohlfäden enthält, die um einen Stützfaden herum angeordnet und mit mindestens einem Wickelfaden umwickelt sind, wobei der Stützfaden über die Länge des Kernbündels unterschiedliche Querschnittsformen aufweist.

2. Hohlfadenbündel nach Anspruch 1, dadurch gekennzeichnet, daß es mindestens ein Teilbündel enthält, bei dem um das Kernbündel herum mindestens eine weitere Lage von Hohlfäden angeordnet ist, wobei jede weitere Lage mit mindestens einem weiteren Wickelfaden umwickelt ist.

3. Hohlfadenbündel nach Anspruch 1 oder 2, dadurch gekennzeichnet, daß der Stützfaden und/oder der Wickelfaden ein Multifilamentfaden ist.

4. Hohlfadenbündel nach einem oder mehreren der Ansprüche 1 bis 3, dadurch gekennzeichnet, daß der Stützfaden und/oder der Wickelfaden ein texturierter Multifilamentfaden ist.

5. Hohlfadenbündel nach einem oder mehreren der Ansprüche 1 bis 4, dadurch gekennzeichnet, daß der Titer des Stützfadens zwischen ein und drei mal so groß ist wie der Titer des Wickelfadens.

6. Hohlfadenbündel nach einem oder mehreren der Ansprüche 1 bis 5, dadurch gekennzeichnet, daß die Hohlfäden eine Ondulation aufweisen.

7. Hohlfadenbündel nach Anspruch 6, dadurch gekennzeichnet, daß die Wickelfäden jeweils im Tal der Ondulation der Hohlfäden angeordnet sind.

8. Hohlfadenbündel nach einem oder mehreren der Ansprüche 1 bis 7, dadurch gekennzeichnet, daß die Hohlfäden des Kernbündels und/oder die Hohlfadenlagen des Teilbündels mit mindestens einem Wickelfaden wendelförmig umwickelt sind.

9. Hohlfadenbündel nach einem oder mehreren der Ansprüche 1 bis 8, dadurch gekennzeichnet, daß die Hohlfäden des Kernbündels beziehungsweise des Teilbündels mit mindestens zwei Wickelfäden wendelförmig umwickelt sind, wobei mindestens ein Wickelfaden eine zu den anderen Wickelfäden gegenläufige Wendel aufweist.

10. Hohlfadenbündel nach Anspruch 8 oder 9, dadurch gekennzeichnet, daß mindestens eine der Wendeln der Wickelfäden über die Länge des Kernbündels beziehungsweise des Teilbündels eine unterschiedliche Steigung aufweist.

11. Hohlfadenbündel nach einem oder mehreren der Ansprüche 1 bis 10, dadurch gekennzeichnet, daß das Kernbündel wellenförmig ausgebildet ist.

12. Hohlfadenbündel nach einem oder mehreren der Ansprüche 1 bis 11, dadurch gekennzeichnet, daß beim Kernbündel der Stützfaden einen Titer von 100 bis 1000 dtex aufweist, um den 6 bis 40 Hohlfäden mit einem Außendurchmesser von 100 bis 600 mm angeordnet sind.

13. Hohlfadenbündel nach einem oder mehreren der Ansprüche 1 bis 12, daß der Wickelfaden einen Titer von 5 bis 350 dtex aufweist.

14. Hohlfadenbündel nach einem oder mehreren der Ansprüche 1 bis 13, dadurch gekennzeichnet, daß es mehrere Kernbündel und/oder Teilbündel enthält.

15. Hohlfadenbündel nach einem oder mehreren der Ansprüche 1 bis 14, dadurch gekennzeichnet, daß die Wickelfäden auf den Kernbündeln beziehungsweise auf den Teilbündeln derart angeordnet sind, daß der Abstand benachbarter Kernbündel und/oder Teilbündel dem Durchmesser des Wickelfadens entspricht.

16. Hohlfadenbündel nach einem oder mehreren der Ansprüche 1 bis 15, dadurch gekennzeichnet, daß die Kernbündel und/oder Teilbündel im Hohlfadenbündel in mehreren zur Erstreckungsrichtung der Hohlfäden parallelen Lagen angeordnet sind, wobei in Draufsicht auf die Lagen sich die Kernbündel und/oder die Teilbündel der einen Lage mit den Kernbündeln beziehungsweise mit den Teilbündeln benachbarter Lagen kreuzen.

17. Hohlfadenbündel nach einem oder mehreren der Ansprüche 1 bis 16, dadurch gekennzeichnet, daß mehrere Kernbüdel und/oder Teilbündel zusammen umwickelt, und mehrere derartig umwickelte Gebilde im Hohlfadenbündel enthalten sind.

18. Hohlfadenbündel nach einem oder mehreren der Ansprüche 1 bis 17, dadurch gekennzeichnet, daß es nur aus Kernbündeln besteht.

19. Hohlfadenbündel nach einem oder mehreren der Ansprüche 2 bis 17, dadurch gekennzeichnet, daß es nur aus Teilbündeln besteht.

20. Hohlfadenbündel nach einem oder mehreren der Ansprüche 2 bis 16, dadurch gekennzeichnet, daß es aus einem einzigen Teilbündel besteht.

21. Hohlfadenbündel nach einem oder mehreren der Ansprüche 2 bis 17, 19 und 20, dadurch gekennzeichnet, daß die Kernbündel der Teilbündel keinen Stützfaden enthalten.

22. Stoff- und/oder Wärmetauscher, enthaltend mindestens ein Hohlfadenbündel nach einem oder mehreren der Ansprüche 1 bis 21, wobei mindestens ein Ende des Hohlfadenbündels derart in einen Rohrboden eingebettet ist, daß alle Hohlfadenenden des betreffenden Hohlfadenbündelendes flüssigkeitsdicht vom Rohrbodenmaterial umfaßt sind.

23. Stoff- und/oder Wärmetauscher gemäß Anspruch 21, bei dem nur ein Ende des Hohlfadenbündels in einem Rohrboden eingebettet sind, dadurch gekennzeichnet, dass die anderen, freien Enden der Hohlfäden flüssigkeitsdicht verschlossen sind.

## Claims

1. Hollow-thread bundle containing at least one core bundle which contains at least three hollow threads which are arranged around a supporting thread and wrapped with at least one winding thread, whereby the supporting thread exhibits variable cross-sectional shapes over the length of the core bundle.

2. Hollow-thread bundle according to Claim 1, characterised in that it contains at least one partial bundle in which at least one further layer of hollow threads is arranged around the core bundle, whereby each further layer is wrapped with at least one further winding thread.

3. Hollow-thread bundle according to Claim 1 or 2, characterised in that the supporting thread and/or the winding thread is a multi-filament thread.

4. Hollow-thread bundle according to one or more of Claims 1 to 3, characterised in that the supporting thread and/or the winding thread is a textured multi-filament thread.

5. Hollow-thread bundle according to one or more of Claims 1 to 4, characterised in that the titre of the supporting thread is between one and three times the titre of the winding thread.

6. Hollow-thread bundle according to one or more of Claims 1 to 5, characterised in that the hollow threads exhibit an undulation.

7. Hollow-thread bundle according to Claim 6, characterised in that the winding threads are each arranged in the valley of the undulation of the hollow threads.

8. Hollow-thread bundle according to one or more of Claims 1 to 7, characterised in that the hollow threads of the core bundle and/or the layers of hollow threads of the partial bundle are wrapped in the form of a helix with at least one winding thread.

9. Hollow-thread bundle according to one or more of Claims 1 to 8, characterised in that the hollow threads of the core bundle or of the partial bundle are wrapped in the form of a helix with at least two winding threads, whereby at least one winding thread exhibits an opposite-sense helix in relation to the other winding threads.

10. Hollow-thread bundle according to Claim 8 or 9, characterised in that at least one of the helices of the winding threads exhibits a variable pitch over the length of the core bundle or of the partial bundle.

11. Hollow-thread bundle according to one or more of Claims 1 to 10, characterised in that the core bundle is of wavy design.

12. Hollow-thread bundle according to one or more of Claims 1 to 11, characterised in that in the case of the core bundle the supporting thread exhibits a titre of 100 to 1,000 dtex, around which supporting thread 6 to 40 hollow threads with an outside diameter of 100 to 600 mm are arranged.

13. Hollow-thread bundle according to one or more of Claims 1 to 12, that the winding thread exhibits a titre of 5 to 350 dtex.

14. Hollow-thread bundle according to one or more of Claims 1 to 13, characterised in that it contains several core bundles and/or partial bundles.

15. Hollow-thread bundle according to one or more of Claims 1 to 14, characterised in that the winding threads are arranged on the core bundles or on the partial bundles in such a way that the spacing of adjacent core bundles and/or partial bundles corresponds to the diameter of the winding thread.

16. Hollow-thread bundle according to one or more of Claims 1 to 15, characterised in that the core bundles and/or partial bundles in the hollow-thread bundle are arranged in several layers parallel to the direction in which the hollow threads extend, whereby, when the layers are viewed from above, the core bundles and/or the partial bundles of the one layer intersect with the core bundles or with the partial bundles of adjacent layers.

17. Hollow-thread bundle according to one or more of Claims 1 to 16, characterised in that several core bundles and/or partial bundles are wrapped together, and several structures which have been wrapped in such a way are contained in the hollow-thread bundle.

18. Hollow-thread bundle according to one or more of Claims 1 to 17, characterised in that it consists only of core bundles.

19. Hollow-thread bundle according to one or more of Claims 2 to 17, characterised in that it consists only of partial bundles.

20. Hollow-thread bundle according to one or more of Claims 2 to 16, characterised in that it consists of a single partial bundle.

21. Hollow-thread bundle according to one or more of Claims 2 to 17, 19 and 20, characterised in that the core bundles of the partial bundles contain no supporting thread.

22. Mass-exchanger and/or heat-exchanger containing at least one hollow-thread bundle according to one or more of Claims 1 to 21, wherein at least one end of the hollow-thread bundle is embedded in a tube plate in such a way that all the hollow-thread ends of the end of the hollow-thread bundle in question are enveloped in liquid-tight manner by the tube-plate material.

23. Mass-exchanger and/or heat-exchanger according to Claim 21, wherein only one end of the hollow-thread bundle are embedded in a tube plate, characterised in that the other, free ends of the hollow threads are sealed in liquid-tight manner.

## Revendications

1. Faisceau de fibres creuses comprenant au moins un faisceau central, lequel faisceau central comprend au moins trois fibres creuses qui sont disposées autour d'un fil de support et sont entourées d'au moins un fil d'enveloppe, le fil de support présentant différentes formes en section transversale sur la longueur du faisceau central.

2. Faisceau de fibres creuses selon la revendication 1, caractérisé par le fait qu'il comprend au moins un faisceau élémentaire, dans lequel au moins une couche supplémentaire de fibres creuses est disposée autour du faisceau central, chaque couche supplémentaire étant entourée d'au moins un fil d'enveloppe supplémentaire.

3. Faisceau de fibres creuses selon la revendication 1 ou 2, caractérisé par le fait que le fil de support et/ou le fil d'enveloppe est/sont un/des fil(s) multifilaments.

4. Faisceau de fibres creuses selon une ou plusieurs des revendications 1 à 4, caractérisé par le fait que le fil de support et/ou le fil d'enveloppe est/sont un/des fil(s) multifilaments texturé(s).

5. Faisceau de fibres creuses selon une ou plusieurs des revendications 1 à 4, caractérisé par le fait que le titre du fil de support est de une à trois fois plus élevé que le titre du fil d'enveloppe.

6. Faisceau de fibres creuses selon une ou plusieurs des revendications 1 à 5, caractérisé par le fait que les fibres creuses présentent une ondulation.

7. Faisceau de fibres creuses selon la revendication 6, caractérisé par le fait que les fils d'enveloppe sont disposés chaque fois dans le creux de l'ondulation des fibres creuses.

8. Faisceau de fibres creuses selon une ou plusieurs des revendications 1 à 7, caractérisé par le fait que les fibres creuses du faisceau central et/ou les couches de fibres creuses du faisceau élémentaire sont entourées d'au moins un fil d'enveloppe enroulé en hélice.

9. Faisceau de fibres creuses selon une ou plusieurs des revendications 1 à 8, caractérisé par le fait que les fibres creuses du faisceau central ou du faisceau élémentaire sont entourées d'au moins deux fils d'enveloppe en hélice, au moins un fil d'enveloppe présentant une hélice de sens opposé aux autres fils d'enveloppe.

10. Faisceau de fibres creuses selon la revendication 8 ou 9, caractérisé par le fait qu'au moins une des hélices des fils d'enveloppe présente un pas qui varie sur la longueur du faisceau central ou du faisceau élémentaire.

11. Faisceau de fibres creuses selon une ou plusieurs des revendications 1 à 10, caractérisé par le fait que le faisceau central a une conformation ondulée.

12. Faisceau de fibres creuses selon une ou plusieurs des revendications 1 à 11, caractérisé par le fait que dans le faisceau central, le fil de support présente un titre compris entre 100 et 1000 dtex et que 6 à 40 fibres creuses avec un diamètre extérieur compris entre 100 et 600 mm sont disposées autour de celui-ci.

13. Faisceau de fibres creuses selon une ou plusieurs des revendications 1 à 12, caractérisé par le fait que le fil d'enveloppe présente un titre compris entre 5 et 350 dtex.

14. Faisceau de fibres creuses selon une ou plusieurs des revendications 1 à 13, caractérisé par le fait qu'il comprend plusieurs faisceaux centraux et/ou faisceaux élémentaires.

15. Faisceau de fibres creuses selon une ou plusieurs des revendications 1 à 14, caractérisé par le fait que les fils d'enveloppe sur les faisceaux centraux ou sur les faisceaux élémentaires sont disposés de telle sorte que la distance entre des faisceaux centraux voisins ou des faisceaux élémentaires voisins corresponde au diamètre du fil d'enveloppe.

16. Faisceau de fibres creuses selon une ou plusieurs des revendications 1 à 15, caractérisé par le fait que les faisceaux centraux et/ou les faisceaux élémentaires, dans le faisceau de fibres creuses, sont disposés en plusieurs couches parallèles à l'axe longitudinal des fibres creuses, les faisceaux centraux et/ou les faisceaux élémentaires d'une couche, en vue de dessus sur les couches, se croisant avec les faisceaux centraux et/ou les faisceaux élémentaires de couches voisines.

17. Faisceau de fibres creuses selon une ou plusieurs des revendications 1 à 16, caractérisé par le fait que plusieurs faisceaux centraux et/ou plusieurs les faisceaux élémentaires sont entourés pour former un ensemble, et que plusieurs structures entourées de la sorte sont contenues dans le faisceau de fibres creuses.

18. Faisceau de fibres creuses selon une ou plusieurs des revendications 1 à 17, caractérisé par le fait qu'il est formé exclusivement de faisceaux centraux.

19. Faisceau de fibres creuses selon une ou plusieurs des revendications 2 à 17, caractérisé par le fait qu'il est formé exclusivement de faisceaux élémentaires.

20. Faisceau de fibres creuses selon une ou plusieurs des revendications 2 à 16, caractérisé par le fait qu'il est formé d'un faisceau élémentaire unique.

21. Faisceau de fibres creuses selon une ou plusieurs des revendications 2 à 17, 19 et 20, caractérisé par le fait que les faisceaux centraux des faisceaux élémentaires ne contiennent pas de fil de support.

22. Echangeur de substances et/ou de chaleur comprenant au moins un faisceau de fibres creuses selon une ou plusieurs des revendications 1 à 21, dans lequel au moins une extrémité du faisceau de fibres creuses est noyée dans une plaque tubulaire de telle sorte que toutes les extrémités de fibres creuses de l'extrémité de faisceau concernée soient entourées d'une manière étanche au liquide par le matériau de la plaque tubulaire.

23. Echangeur de substances et/ou de chaleur selon la revendication 21, dans lequel au moins une extrémité du faisceau de fibres creuses est noyée dans une plaque tubulaire, caractérisé par le fait que les autres extrémités libres des fibres creuses sont fermées de manière étanche au liquide.
